# EUROPEAN PATENT APPLICATION

(11) **EP 3 035 310 A1**
(43) Date of publication of application: **22.06.2016**
(21) Application number: 15198511.6
(22) Date of filing: 08.12.2015
(51) Int. Cl.: G08B 13/24

(54) **DETECTION OF CONCEALED SECURITY DEVICES IN A SECURITY DEVICE MONITORING ENVIRONMENT**

(30) Priority: 18.12.2014 US 201414575862
(71) Applicant: Checkpoint Systems, Inc., Thorofare, NJ 08086 (US)
(72) Inventor: HOEHN, Richard, Nashville, TN 37208 (US); HAZELWOOD, Zachary Cody, Nashville, TN 37206 (US); BRADSHAW, Merril F., Waxhaw, NC 28173 (US); DOBECK, Brian R., Monroe, NC 28110 (US)
(74) Representative: Ström & Gulliksson AB

(57) **Abstract**

A security system controller may include processing circuitry. The processing circuitry may be configured to receive information indicative of motion of a security tag disposed on a product in a monitoring environment, track motion of the security tag responsive to information received via wireless communication between the security tag and a plurality of locator devices of a first locating system, and determine whether a potential foil bag condition exists relative to the security tag based on a loss of communication with the security tag while tracking motion of the security tag.

## Description

### TECHNICAL FIELD

Various example embodiments relate generally to retail theft deterrent and merchandise protection devices and methods.

### BACKGROUND

Security devices have continued to evolve over time to improve the functional capabilities and reduce the cost of such devices. Some security devices are currently provided to be attached to individual products or objects in order to deter or prevent theft of such products or objects. In some cases, the security devices include tags or other such components that can be detected by gate devices at the exit of a retail establishment. These gate devices may be sometimes referred to as towers or pedestals. When the security device passes through or proximate to the gates, an alarm or other notification locally at the product and/or at the gates may be triggered. Additionally, a key may be provided at the point of sale terminal so that the security device can be removed when the corresponding products or objects are purchased.

In order to avoid detection at these security gates, and enable removal of products from the store without purchase, some individuals may attempt to remove, tamper with, or destroy the security devices. However, in other cases, individuals may attempt to use other schemes, such as moving rapidly through the gates or place the tags in a bag or other container that can block the security tags from being detected by the security gates.

Due to these and other issues, retailers have demanded that security systems be improved to further inhibit attempts to engage in retail product theft. At least with respect to the use of containers that can prevent detection of tags provided therein, metallic foil or other metallic materials may be used to line a bag or other container into which the tagged items may be placed. With the tagged items placed therein, the gate devices at the exit may not detect the tags on the items due to interference caused by the materials lining the container. Accordingly, relative to deterring theft in this manner, it may be desirable to enable retailers to detect the use of such a container (e.g., a foil bag).

### BRIEF SUMMARY OF SOME EXAMPLES

Some example embodiments may provide an ability to detect when security tags can no longer be communicated with in a reliable fashion with (or "drop off of) a tracking or sensing network. The dropping of a tag, or tags, off of the network may be indicative of the placement of the tags (and the products to which they are attached) in a container that interferes with the tag's ability to the communicate with other devices (e.g., the network) such as a foil bag or other metallic lined container.

In one example embodiment, a security system controller including processing circuitry is provided. The processing circuitry may be configured to receive information indicative of motion of a security tag disposed on a product in a monitoring environment, track motion of the security tag responsive to information received via wireless communication between the security tag and a plurality of locator devices of a first locating system, and determine whether a potential foil bag condition exists relative to the security tag based on a loss of communication with the security tag while tracking motion of the security tag.

According to another example embodiment, a security system is provided. The security system may include a security tag disposed on a product in a monitoring environment, a plurality of locator devices defining a first locating system, the locator devices configured to wirelessly communicate with the security tag, and a system controller including processing circuitry. The processing circuitry may be configured to receive information indicative of motion of the security tag, track motion of the security tag responsive to information received from the locator devices, and determine whether a potential foil bag condition exists relative to the security tag based on a loss of communication with the security tag while tracking motion of the security tag.

### BRIEF DESCRIPTION OF THE SEVERAL VIEWS OF THE DRAWING(S)

Having thus described some example embodiments of the invention in general terms, reference will now be made to the accompanying drawings, which are not necessarily drawn to scale, and wherein:
FIG. 1 illustrates a conceptual diagram of a monitoring environment within a retail store according to an example embodiment;
FIG. 2 illustrates a block diagram of a monitoring network that may be employed to monitor tags that may be placed on objects (products) in the monitoring environment in accordance with an example embodiment;
FIG. 3 illustrates a block diagram of a tag according to an example embodiment;
FIG. 4 illustrates a block diagram of a system controller according to an example embodiment;
FIG. 5 illustrates a block diagram showing a control flow representative of an algorithm executable at the system controller in accordance with an example embodiment; and
FIG. 6 illustrates a block diagram of a method of determining when a tag in a monitoring system is placed in a foil bag or similar container in accordance with an example embodiment.

### DETAILED DESCRIPTION

Some example embodiments now will be described more fully hereinafter with reference to the accompanying drawings, in which some, but not all embodiments are shown. Indeed, the examples described and pictured herein should not be construed as being limiting as to the scope, applicability or configuration of the present disclosure. Like reference numerals refer to like elements throughout. Furthermore, as used herein, the term "or" is to be interpreted as a logical operator that results in true whenever one or more of its operands are true. As used herein, "operable coupling" should be understood to relate to direct or indirect connection that, in either case, enables at least a functional interconnection of components that are operably coupled to each other.

Some example embodiments may enable provision of a network capable of detecting activities that take security devices (e.g., tags) out of communication with an anti-theft asset monitoring network. In some cases, the placement of one or more tags in a foil bag or other container that inhibits wireless tag communications may cause the tags to lose a communication connection with the network. Example embodiments may be able to identify specific events that can be correlated to the use of a foil bag or inhibiting container instead of other events that could cause the tag to lose communication with the network. An alert may then be provided to notify retail store personnel of the situation.

An example embodiment will be described herein as it relates to a security device (e.g., a tag) that can be attached to an object (e.g., a retail product) and wirelessly communicate with components of an anti-theft asset monitoring network. The network components and the tags may be configured to communicate with each other via any of a number of different communication schemes. Some of these schemes may only monitor for tags in an area proximate to an exit of the retail store being protected. Other schemes may monitor tags throughout the retail store or in various specific zones that may be defined. Furthermore, some embodiments may employ more than one communication scheme simultaneously or in a manner that allows switching between such communication schemes. Since this represents the most complex communication paradigm in which an example embodiment is likely to be practiced, an example monitoring environment will be described that employs more than one communication scheme.

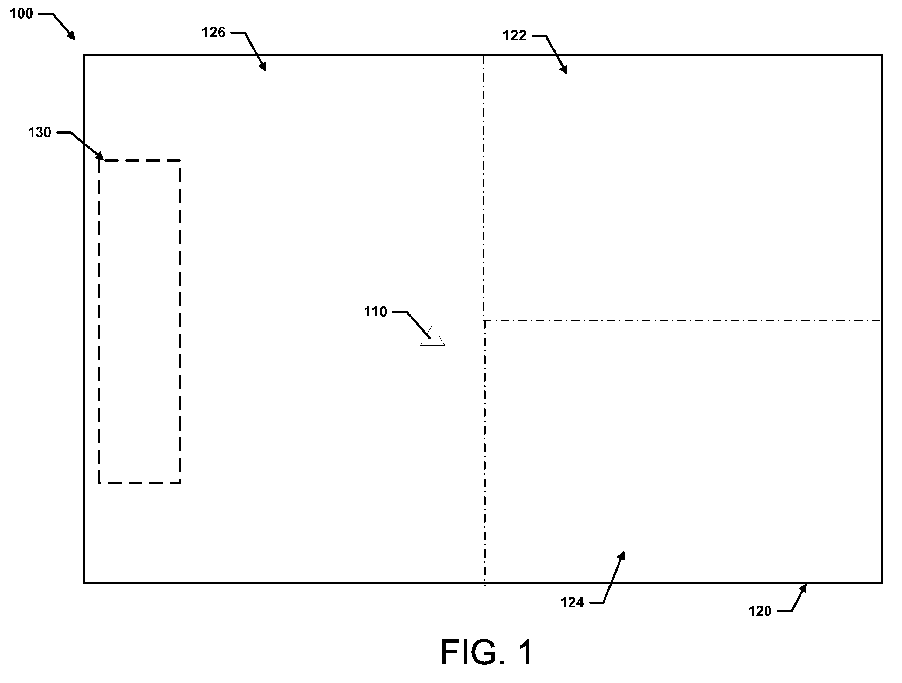

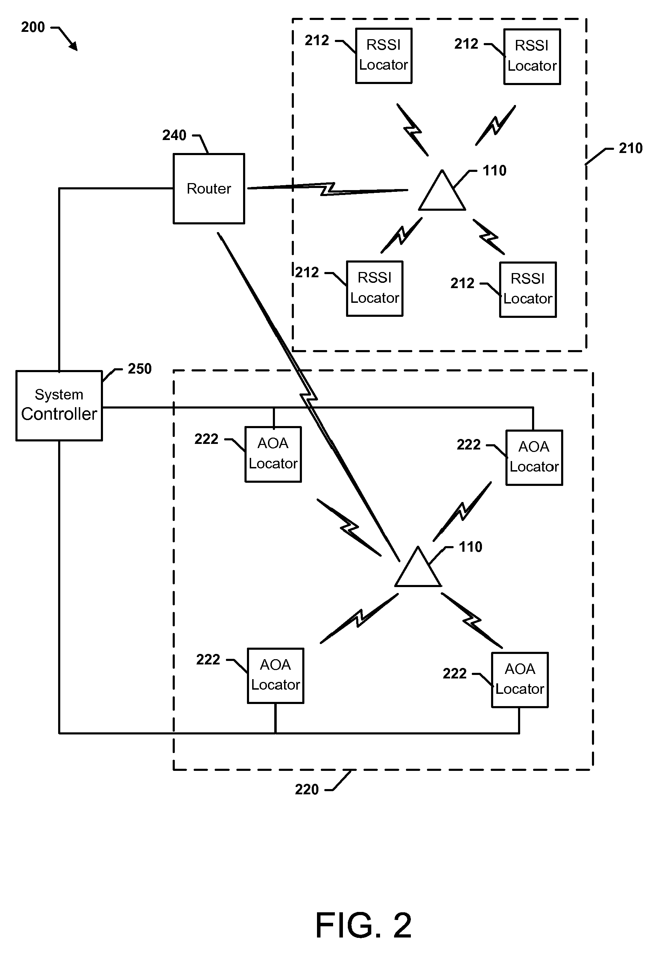

FIG. 1 illustrates a conceptual diagram of a monitoring environment 100 within a retail store. FIG. 2 illustrates a block diagram of a monitoring network 200 that may be employed to monitor tags 110 that may be placed on objects in the monitoring environment 100 in accordance with an example embodiment. As shown in FIG. 1, the monitoring environment 100 may include a first monitoring zone 120 and a second monitoring zone 130. The first monitoring zone 120 may represent a relatively large area of the store (e.g., the sales floor). The second monitoring zone 130 may represent a smaller area of the store and, in some cases, may be proximate to the exit of the store. The first and second monitoring zones 120 and 130 may be exclusively defined or, in some embodiments, the second monitoring zone 130 may exist within and overlap with the first monitoring zone 120.

In some embodiments, the monitoring zones may be further divided into sub-zones. For example, as shown in FIG. 1, the first monitoring zone 120 may be divided into a first sub-zone 122, a second sub-zone 124 and a third sub-zone 126. In some cases, the sub-zones may be correlated with specific departments, locations or product lines within the store. However, the sub-zones could alternatively be defined to divide the monitoring environment 100 into conveniently defined regions to facilitate locating tags 110 within particular regions and detect movement within, out of, or into such regions. In some cases, the sub-zones may be defined at least in part based on proximity to the exit and/or to the second monitoring zone 130. Combinations of the above-described ways of defining sub-zones may also be employed.

In some cases, the second monitoring zone 130 may employ a more accurate and/or sensitive locating technique than the technique employed in the first monitoring zone 120. Although the first monitoring zone 120 may sometimes employ a less accurate or sensitive locating technique than the second monitoring zone 130, in some situations, the sub-zones of the first monitoring zone 120 may employ different levels of sensitivity (e.g., using higher or lower sample rates) in different sub-zones. For example, the third sub-zone 126, which is closer to the second monitoring zone 130 and the exit, may employ a higher sample rate for improved accuracy and sensitivity relative to the sample rate employed in the first and second sub-zones 122 and 124. Accordingly, as a product moves closer to the exit, the sensitivity to detection of the location of the product may increase.

The monitoring network 200 may include a first locating system 210 and a second locating system 220. Each of the first locating system 210 and the second locating system 220 may employ differing techniques for locating a tag 110 and may utilize a corresponding different hardware suite and communication paradigm. In an example embodiment, the first locating system 210 may be a locating system that employs received signal strength indication (RSSI) technology for locating the tags 110. Meanwhile, the second locating system 220 may employ angle of arrival (AOA) technology or other locating techniques, such as time of arrival (TOA), time differential of arrival (TDOA), or other techniques where a tag 110 sends a beacon signal to be listened for by an array of receivers to locate the tags 110. For example, AOA technology may employ receivers or AOA locators 222 including antenna arrays that listen for beacon packets, sent from the tags 110, having the correct format, and then process the packets to determine an angle of arrival of the packet relative to the receiver and the antenna array position. The active area of measurement may be relative to the center point of the antenna. Angle data may be calculated using peaks of angle curves generated based on beacon signals received in the active sensing area of the antennas of the array. Further, for locating via AOA technology, the tags 110 may be configured to act as beacon devices sending out signals to be detected by AOA locators 222. The AOA locators 222, which may be configured as a patch antenna array (e.g., with 4 antennas) with each of the AOA locators 222 being disposed, for example, at or near corners of the second monitoring zone 130 (or the third sub-zone 126).

Generally speaking, in an RSSI system (e.g., the first locating system 210), the tags 110 may be configured to act as listening devices to receive beacon signals transmitted from fixed position (or known position) RSSI locators 212. Based on the signal strengths of the signals received from each of the RSSI locator 212 at the tag 110, the position of the tag 110 relative to the RSSI locators 212 may be determined.

While the first locating system 210 and the second locating system 200 are described as employing different techniques for determining the location of a tag 110 (i.e., RSSI, AOA, TOA, TDOA, etc.), it is understood that, according to some example embodiments, the same technique could be used in both systems, however with different parameters between the systems. For example, the first locating system 210 may employ TDOA a lower sample rate than the second locating system 220 also employing TDOA.

In some embodiments, the second locating system 220 may be used to implement a gate solution for monitoring the exit of the store. Thus, for example, the second locating system 220 may be employed in the second monitoring zone 130. However, the second locating system 220 could also or alternatively be employed for an accurate (or at least more accurate) inventory zone inside which more accurate monitoring of tag 110 movement may be accomplished. Thus, for example, the second locating system 220 may be employed in the third sub-zone 126 to increase sensitivity to tag 110 location as the tag 110 moves closer to the exit. Moreover, the second locating system 220 may have low sample rate and high sample rate operational capabilities such that, for example, low rate AOA locating may be performed in the third sub-zone 126 and high rate AOA locating may be performed in the second monitoring zone 130. Finally, the first and/or second locating system 210 and 220 may be used for general tag 110 location determination with varying levels of accuracy dependent upon the locating technology used and the sample rate employed.

In some embodiments, since both the first and second locating systems 210 and 220 may be employed proximate to each other or even in the same area, the tags 110 may be configured to communicate with either or both of the first and second locating systems 210 and 220. In some cases, the second (e.g., AOA) and the first (e.g., RSSI) systems may be supported by employing an interleaved sample window. As such, for example, the tags 110 may be configured to read or listen for beacon signals transmitted from RSSI locators 212 every 500 msec. Thus, the RSSI sample rate may be half a second. Meanwhile, the RSSI locators 212 may be configured to beacon at a higher rate. The tags 110 may also be configured to beacon themselves with a 500 msec low rate beacon time with 20 msec slot times that are able to be changed to 160 msec high rate beaconing time to support, for example, AOA locating. This can provide a relatively large number of time slots (e.g., 25) that can be divided between high rate and low rate sampling via AOA, while also being interleaved with RSSI sampling. The specific details of locating system communication frequencies, sampling rates, and location determination algorithms may change in various different embodiments. Thus, the description above should be appreciated as merely one example implementation that may be employed in some contexts.

In an example embodiment, the number of tags that can be tracked or monitored may depend on the number of samples needed for required or desired accuracy and a desired hit rate for a given operational scenario. Different tracking requirements may be prescribed for various zones, sub-zones and/or the like based on the needs or desires of the retailer. Thus, for example, an alarm zone, an approach zone and other inventory tracking zones may be defined and different sample rates and/or other system characteristics may be defined in each zone. Meanwhile, in each zone, the tags 110 may be trackable using either or both of the first locating system 210 and the second locating system 220.

In some example embodiments, regardless of the type of systems that are being employed, a tag 110 may be configured to operate in a low power mode where the tag is asleep and wakes up to check in with the network, for example via system controller 250, at relatively large intervals (e.g., every 30 minutes). Movement of the tag 110 (e.g., as detected local to the tag via an accelerometer or jiggle switch) may cause the tag 110 to wake up, leave the low power mode to enter an active mode, and initiate communication with the system controller 250 at shorter intervals such as every half second (e.g., using the 500 msec sample window).
According to some example embodiments, the tag 110 may be configured to send a motion start message to the system controller 250 to inform the system controller 250 that the tag has locally detected motion and that the tag will now be communicating at shorter intervals. The system controller 250 may track movement of the tag 110 after the motion start message is received and either update the position of the tag 110 (e.g., on a display or in a database or position log) or perform some other function based on the position of the tag 110 (e.g., inform staff of the tag location, generate an alarm or notification, etc.). When the tag 110 stops moving for a predetermined period of time (e.g., a local timer may be employed that resets in response to actuation of the jiggle switch or the like), a motion end message may be sent to the system controller 250 and, in some cases, the tag 110 may shift back to a low power mode.

As shown in FIG. 2, a plurality of the RSSI locators 212 may be positioned in corresponding zones that are to be monitored using RSSI. For example, the RSSI locators 212 may be positioned at corners or boundaries of the zones. In some example embodiments, the RSSI locators 212 could also be located within zones and the boundaries of the zones may be defined based on a predefined distance from one or more of the RSSI locators 212. The tags 110 may receive transmissions from the RSSI locators 212 and communicate information indicative of a location determined based on signal strength or signal strength data to be used to determine location through a router 240 to a system controller 250. The system controller 250 may, for example, be a computer, server or other terminal that may host software and/or hardware configurable to transform the data indicative of physical location of the tags 110 and the objects to which they are attached into trackable items that may be used to trigger various theft deterrent functions as described herein.

In some example embodiments, the system controller 250 may also be in communication with the AOA locators 222. The AOA locators 222 may be disposed within or around boundaries of the zone monitored via the second locating system 220 in a similar manner to the disposal of the RSSI locators 212 described above, or in a number of other configurations. However, the AOA locators 222 may listen for beacon signals instead of transmitting any beaconing signals. Thus, when the tags 110 are transmitting beacon signals for operation to the second locating system 220, the AOA locators 222 may each determine angle information indicative of the angle of the tag 110 relative to the corresponding AOA locator 222, or more specifically, the antennas of the AO locator 222 (or provide such information to the system controller 250 as is needed to enable the system controller 250 to determine the angle information). An estimated tag location may then be determined (e.g., via analysis of the angle information or via triangulation) by the system controller 250.

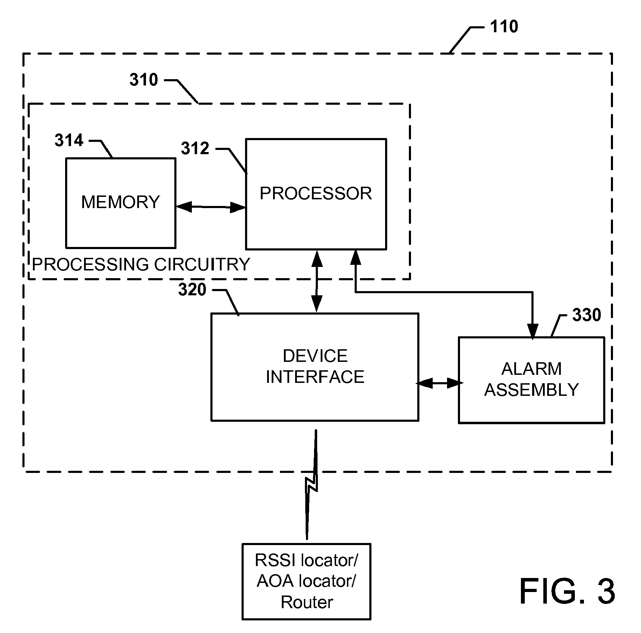

FIG. 3 illustrates a block diagram of tag circuitry in accordance with an example embodiment. As shown in FIG. 3, the tag 110 may include processing circuitry 310 configured in accordance with an example embodiment as described herein. In this regard, for example, the tag 110 may utilize the processing circuitry 310 to provide electronic control inputs to one or more functional units (which may be implemented by or with the assistance of the of the processing circuitry 310) of the tag 110 to receive, transmit and/or process data associated with the one or more functional units and perform communications necessary to enable tracking of tags, issuing of alarms and/or alerts and/or the like as described herein.

In some embodiments, the processing circuitry 310 may be embodied as a chip or chip set. In other words, the processing circuitry 310 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The processing circuitry 310 may therefore, in some cases, be configured to implement an embodiment of the present invention on a single chip or as a single "system on a chip." As such, in some cases, a chip or chipset may constitute means for performing one or more operations for providing the functionalities described herein.

In an example embodiment, the processing circuitry 310 may include one or more instances of a processor 312 and memory 314 that may be in communication with or otherwise control a device interface 320. As such, the processing circuitry 310 may be embodied as a circuit chip (e.g., an integrated circuit chip) configured (e.g., with hardware, software or a combination of hardware and software) to perform operations described herein.

The device interface 320 may include one or more interface mechanisms for enabling communication with other devices (e.g., RSSI locators 212, AOA locators 222, routers 240, other tags 110, tag readers, and/or other devices). In some cases, the device interface 320 may be any means such as a device or circuitry embodied in either hardware, or a combination of hardware and software that is configured to receive and/or transmit data from/to devices or components in communication with the processing circuitry 310 via internal and/or external communication mechanisms. Accordingly, for example, the device interface 320 may further include wireless communication equipment (e.g., one or more antennas) for at least communicating with RSSI locators 212, AOA locators 222, and/or routers 240. The device interface 320 may therefore include one or more antenna arrays that may be configured or configurable to receive and/or transmit properly formatted signals associated with at least the first locating system 210 and the second locating system 220. The device interface 320 may further include radio circuitry configured to encode and/or decode, modulate and/or demodulate, or otherwise process wireless signals received by or to be transmitted by the antenna array(s).

In some embodiments, the tag 110 may also include an alarm assembly 330, which may include an audio device (e.g., a piezoelectric, mechanical, or electromechanical beeper, buzzer or other audio signaling device such as an audible alarm). The alarm assembly 330 may include a speaker or other sound generating device that may be provided in a housing of the tag 110. In some example embodiments, the alarm assembly 330 may also include visible indicia (e.g., lights of one or more colors such as a bi-color (e.g., red/green) LED). The visible indicia of the alarm assembly 330 and/or the audio device thereof may be used in various ways to facilitate or enhance operation of the tag 110. For example, different tones, sounds, or music may be played when the tag 110 receives different messages, or is operated in a certain way (e.g., movement into or out of a particular zone, proximity to a gate, passage through the gate, loss of communication with the network, detection of tampering or cutting of wires that affixed the tag 110 to an object, etc.). Similarly, different light colors, light flash sequences or other visible indicia may be provided in combination with or instead of the audible indicia in order to indicate certain conditions (e.g., movement into or out of a particular zone, proximity to a gate, passage through the gate, loss of communication with the network, detection of tampering or cutting of wires that affixed the tag 110 to an object, etc.).

The processor 312 may be embodied in a number of different ways. For example, the processor 312 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 312 may be configured to execute instructions stored in the memory 314 or otherwise accessible to the processor 312. As such, whether configured by hardware or by a combination of hardware and software, the processor 312 may represent an physical entity (e.g., physically embodied in circuitry - in the form of processing circuitry 310) capable of performing operations according to example embodiments while configured accordingly. Thus, for example, when the processor 312 is embodied as an ASIC, FPGA or the like, the processor 312 may be specifically configured hardware for conducting the operations described herein. Alternatively, as another example, when the processor 312 is embodied as an executor of software instructions, the instructions may specifically configure the processor 312 to perform the operations described herein in reference to execution of an example embodiment.

In some examples, the processor 312 (or the processing circuitry 310) may be embodied as, include or otherwise control the operation of the tag 110 based on inputs received by the processing circuitry 310. As such, in some embodiments, the processor 312 (or the processing circuitry 310) may be said to cause each of the operations described in connection with the tag 110 to occur in relation to operation of the tag 110 relative to undertaking the corresponding functionalities associated therewith responsive to execution of instructions or algorithms configuring the processor 312 (or processing circuitry 310) accordingly. In particular, the processor 312 (or processing circuitry 310) may be configured to enable the tag 110 to communicate with the RSSI locators 212, AOA locators 222, and/or routers 240 to provide information to the system controller 250 that enables the system controller 250 to locate the tag and, in some cases, perform other functions based on the location of the tag 110 or other information about the status of the tag 110 that is determinable from the communications with the tag 110 (or lack thereof).

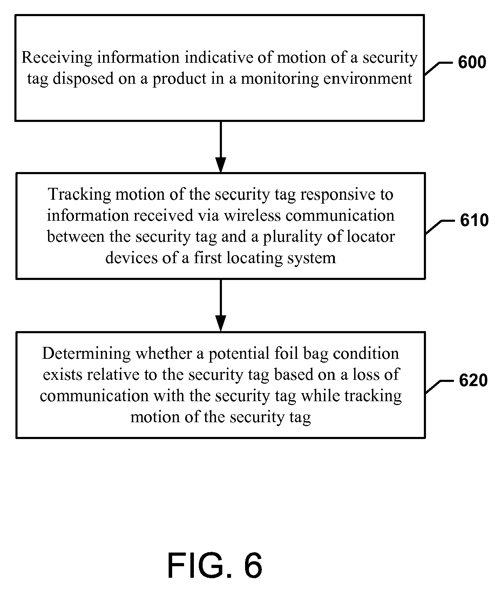

In an exemplary embodiment, the memory 314 may include one or more non-transitory memory devices such as, for example, volatile and/or non-volatile memory that may be either fixed or removable. The memory 314 may be configured to store information, data, applications, instructions or the like for enabling the processing circuitry 310 to carry out various functions in accordance with exemple embodiments. For example, the memory 314 may be configured to buffer input data for processing by the processor 312. Additionally or alternatively, the memory 314 may be configured to store instructions for execution by the processor 312. As yet another alternative or additional capability, the memory 314 may include one or more databases that may store a variety of data sets or tables useful for operation of the tag 110. Among the contents of the memory 314, applications or instruction sets may be stored for execution by the processor 312 in order to carry out the functionality associated with each respective application or instruction set. In some cases, the applications/instruction sets may include instructions for carrying out some or all of the operations described in reference to the algorithms or flow charts described herein, including but not limited to those described with respect to FIG. 6. In particular, the memory 314 may store executable instructions that enable the computational power of the processing circuitry 310 to be employed to improve the functioning of the tag 110 relative to the tracking, notifying and alarming functions described herein. As such, the improved operation of the computational components of the tag 110 transforms the tag 110 into a more capable tracking, notifying and alarming device relative to the physical objects to which the tag 110 is attached.

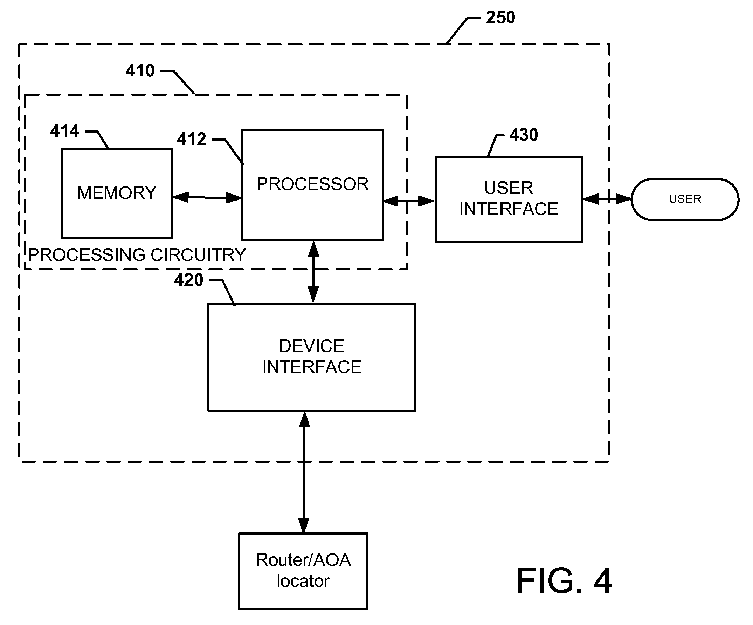

FIG. 4 illustrates a block diagram of the system controller 250 in accordance with an example embodiment. As shown in FIG. 4, the system controller 250 may include processing circuitry 410 of an example embodiment as described herein. In this regard, for example, the system controller 250 may utilize the processing circuitry 410 to provide electronic control inputs to one or more functional units of the system controller 250 to obtain, transmit and/or process data associated with the one or more functional units and perform the subsequent locating, tracking, notification, and/or alarm functions described herein.

In some embodiments, the processing circuitry 410 may be embodied in physical and functional form in a similar manner to that which has been described above with respect to FIG. 3. However, according to some example embodiments, the processing circuitry 410 may have expanded capabilities with respect to processing speed and communication throughput relative the processing circuitry utilized by the tag 110.

In an example embodiment, the processing circuitry 410 may include one or more instances of a processor 412 and memory 414 that may be in communication with or otherwise control a device interface 420 and, in some cases, a user interface 430. As such, the processing circuitry 410 may be embodied as a circuit chip (e.g., an integrated circuit chip) configured (e.g., with hardware, software or a combination of hardware and software) to perform operations described herein.

The user interface 430 may be in communication with the processing circuitry 410 to receive an indication of a user input at the user interface 430 and/or to provide an audible, visual, tactile or other output to the user. As such, the user interface 430 may include, for example, a touch screen, one or more switches, buttons or keys (e.g., function buttons), mouse, joystick, keyboard, and/or other input mechanisms. In an example embodiment, the user interface 430 may include one or a plurality of lights, a display, a speaker, a tone generator, a vibration unit and/or the like as potential output mechanisms.

The device interface 420 may include one or more interface mechanisms for enabling communication with other devices (e.g., AOA locators 222, routers 240 and/or external network devices). In some cases, the device interface 420 may be any means such as a device or circuitry embodied in either hardware, or a combination of hardware and software that is configured to receive and/or transmit data from/to devices or components in communication with the processing circuitry 410 via internal and/or external communication mechanisms. Accordingly, for example, the device interface 420 may further include Ethernet connections and/or wireless communication equipment for at least communicating with the AOA locators 222 and/or routers 240.

The processor 412 may be embodied in a number of different ways. For example, the processor 412 may be embodied as various processing means such as one or more of a microprocessor or other processing element, a coprocessor, a controller or various other computing or processing devices including integrated circuits such as, for example, an ASIC (application specific integrated circuit), an FPGA (field programmable gate array), or the like. In an example embodiment, the processor 412 may be configured to execute instructions stored in the memory 414 or otherwise accessible to the processor 412. As such, whether configured by hardware or by a combination of hardware and software, the processor 412 may represent an entity (e.g., physically embodied in circuitry - in the form of processing circuitry 410) capable of performing operations according to embodiments of the present invention while configured accordingly. Thus, for example, when the processor 412 is embodied as an ASIC, FPGA or the like, the processor 412 may be specifically configured hardware for conducting the operations described herein. Alternatively, as another example, when the processor 412 is embodied as an executor of software instructions, the instructions may specifically configure the processor 412 to perform the operations described herein in reference to execution of an example embodiment.

In some examples, the processor 412 (or the processing circuitry 410) may be embodied as, include or otherwise control the operation of the system controller 250 based on inputs received by the processing circuitry 410. As such, in some embodiments, the processor 412 (or the processing circuitry 410) may be said to cause each of the operations described in connection with the system controller 250 in relation to operation of the system controller 250 relative to undertaking the corresponding functionalities associated therewith responsive to execution of instructions or algorithms configuring the processor 412 (or processing circuitry 410) accordingly. In particular, the processor 412 (or processing circuitry 410) may be configured to enable the system controller 250 to communicate with the AOA locators 222, and/or routers 240 to provide information to the system controller 250 that enables the system controller 250 to locate the tag 110 and, in some cases, perform other functions based on the location of the tag 110 or other information about the status of the tag 110 that is determinable from the communications with the tag 110 (or lack thereof).

In an exemplary embodiment, the memory 414 may include one or more non-transitory memory devices such as, for example, volatile and/or non-volatile memory that may be either fixed or removable. The memory 414 may be configured to store information, data, applications, instructions or the like for enabling the processing circuitry 410 to carry out various functions in accordance with exemplary embodiments of the present invention. For example, the memory 414 could be configured to buffer input data for processing by the processor 412. Additionally or alternatively, the memory 414 could be configured to store instructions for execution by the processor 412. As yet another alternative or additional capability, the memory 414 may include one or more databases that may store a variety of data sets or tables useful for operation of the system controller 250. Among the contents of the memory 414, applications or instruction sets may be stored for execution by the processor 412 in order to carry out the functionality associated with each respective application or instruction set. In some cases, the applications/instruction sets may include instructions for carrying out some or all of the operations described in reference to the algorithms or flow charts described herein. In particular, the memory 414 may store executable instructions that enable the computational power of the processing circuitry 410 to be employed to improve the functioning of the system controller 250 relative to the tracking, notifying and alarming functions described herein. As such, the improved operation of the computational components of the system controller 250 transforms the system controller 250 into a more capable tracking, notifying and alarming device relative to the physical objects to which the tag 110 is attached. The processing circuitry 410 may therefore be configured, e.g., by instruction execution, to receive signals from the tags (e.g., via the locators and/or the router 240) and transform attributes of the received signals into data describing the location of the tags 110 for presentation to a user on a terminal or to trigger other functionalities of the system.

In an example embodiment, the system controller 250 may be configured to detect the concealment of a tag from the network via, for example, the insertion of the tag 110 into a foil bag or other metallic-lined container that is configured to prevent communication between the tag 110 and any gate or other tracking device. In particular, for example, after the system controller 250 receives the motion start message and before the system controller 250 receives the motion end message from the tag 110, the system controller 250 may be configured to detect situations during which the tag 110 drops off the network 200 (i.e., loses reliable communication with the network). Dropping off the network 200 after motion has started and before the tag 110 indicates that motion has stopped may be indicative of a situation in which the tag 110 has been destroyed, damaged, or concealed in a manner that prevents wireless communication (e.g., placed in a foil bag). Merely dropping off the network 200 after motion started but without any other local alarming condition (e.g., due to cutting of a tether or damaging the tag 110) may be indicative of the use of the foil bag, or an equivalent container. Herein, use of the phrase "foil bag condition" may refer to any employment of an apparatus that operates to prevent or inhibit wireless communications to or from the tag 110.

In order to detect a potential foil bag condition, the system controller 250 may be configured to determine that the tag 110 has dropped off the network 200 for at least a given amount of time or during an predicable sequence of events. As such, the system controller 250 may, for example, be configured to detect an interval that is at least two times the normal sampling interval during which the tag 110 has failed to communicate by failing to signal to an AOA locator 222 or by failing to report signal strength measurements to the router 240, after having received a motion start message from the tag 110. Thus, for the example described above having a half second sampling window, the tag 110 must fail to communicate with the system controller 250 for at least a full second (thereby missing two full sampling intervals). Longer periods may also be defined (e.g., 4 seconds or in terms of multiple sampling intervals) in some situations to adjust to for the possibility of false alarms. Thus, the period of non-communication that is required in order to determine that a potential foil bag condition exists responsive to the tag 110 dropping off the network 200 may be adjusted.

In some embodiments, the system controller 250 may be configured to trigger a potential foil bag alert when the potential foil bag condition is detected. The potential foil bag alert may be embodied as an alarm or notification provided within the network 200. In some cases, the notification may include an audible indication of a foil bag alert sent over a communication network maintained within the store via, for example, a fixed position speaker or a mobile terminal carried by store personnel. However, alternatively or additionally, a display may be updated with an alert indicating the existence of a foil bag alert or a database with an event log may be updated. In some cases, the last known location (e.g., as determined by the system controller 250) of the tag 110 prior to detection of the potential foil bag condition may be provided (e.g., audibly or visually) with the audible or visual indication of the foil bag alert. The last known location may therefore be shown on the display or the last known location may be announced to store personnel. If an alarm is triggered, the alarm indication may be generated at a gate of the store, on the communication network or on the display, among other possible locations.

In an example embodiment, the system controller 250 may be configured to send a message to the tag 110 to attempt to reach and/or locate the tag 110. In some cases, the message may direct the tag 110 to alarm locally (e.g., by triggering the alarm assembly 330). Thus, for example, if for any reason if the tag 110 is enabled to receive the message (e.g., if the foil bag is opened), the tag 110 may alarm audibly, mechanically (e.g., vibrate) and/or visibly.

In some cases, the tag 110 itself may initiate alarms when or responsive to loss of communication with the network due to being placed in a foil bag or the like. For example, the tag 110 may be configured to check for acknowledgements (or ACKs) of any messages the tag 110 sends to the router 240 and/or the AOA locators 222. If no acknowledgements are received for at least a predetermined duration of time or number of messages, the tag 110 may be configured to assume that the messages the tag 110 is attempting to send are being inhibited from transmission by a foil bag or other such container. As such, the tag 110 may be configured to alarm locally (based on operation of the alarm assembly 330) in response to failure to receive at least a predetermined number of ACK messages in response to messages sent by the tag 110. In some example embodiments, the predetermined number of ACK messages may be tallied only when the ACK messages are sequentially not received. Thus, for example, receipt of an ACK message may reset a counter that is configured to detect the predetermined number of missed ACK messages. Similarly, according to some example embodiments, a timer may be employed that only resets when a select number of ACK messages are received or when an ACK to a given message has not been received for a set amount of time.

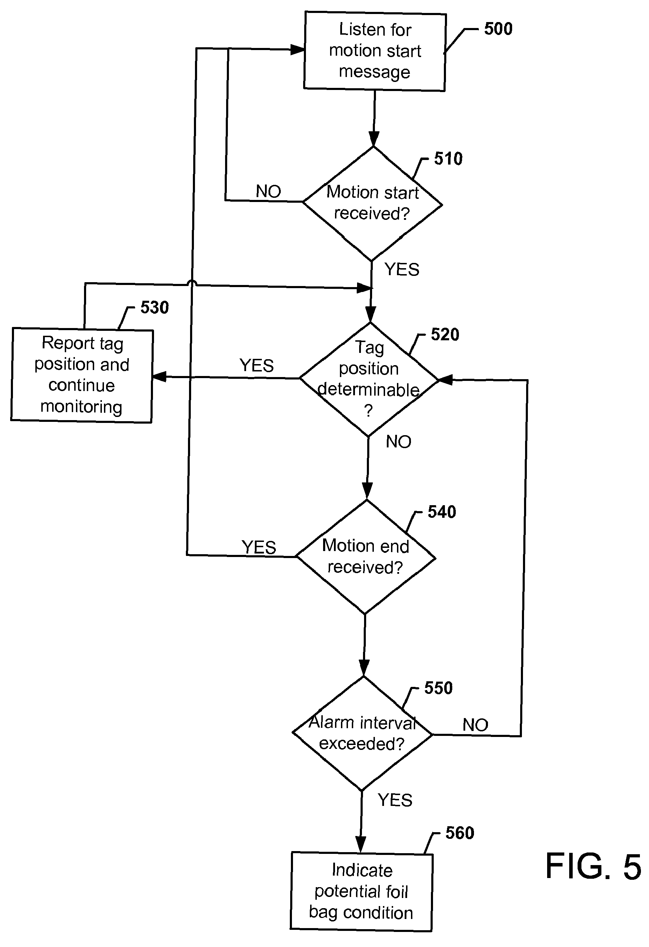

From a technical perspective, the system controller 250 may be used to support some or all of the operations described above. As such, the platforms described in FIGS. 1-4 may be used to facilitate the implementation of several computer program and/or network communication based interactions. As an example, FIGS. 5 and 6 are flowcharts of example methods and program products according to an example embodiment. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a computing device and executed by a processor in the computing device. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, FIG. 5 illustrates a block diagram showing a control flow representative of an algorithm executable at the system controller 250 in accordance with some example embodiments. As shown in FIG. 5, the system controller 250 may initially listen for a motion start message to be received from one of the tags at operation 500. A decision may be made as to whether such a message is received at operation 510. If no motion start message is received, the system controller 250 may continue to listen. If the motion start message is received, then, according to some example embodiments, a decision may be made as to whether tag position is determinable from communications between the tag and monitoring system locators and/or routers at operation 520. If tag position is determinable, then the tag position may be reported (e.g., to a position log and/or to a display device) and continued monitoring may be performed at operation 530. Of note, the monitoring of tag position may trigger alarm or other functions based on proximity to a gate area or any other defined functionality. If tag position is not determinable, a decision may be made as to whether a motion end message has been received at operation 540. In some example embodiments, a motion end message may be expected to be received because a motion start message had been previously received. If a motion end message is received, then the process may start over with listening for the next motion start message. However, if no motion end message has been received and, in some example embodiments if tag position is also not determinable, then it is possible that the tag has been damaged, destroyed or otherwise placed in a foil bag (or similar container) that is preventing communication with the tag. Thus, a check may be made at operation 550 to see if predetermined period of non-communication, also referred to as the alarm interval has been exceeded. In other words, a determination may be made as to whether the tag has lost communication for an interval that is at least a predetermined length (e.g., at least two times the normal sample interval) that is considered to be indicative of a possible foil bag condition. If the alarm interval is not exceeded, continued efforts to determine tag position may be made. However, if the alarm interval is exceeded, then a potential foil bag condition may be indicated at operation 560.

The potential foil bag condition, when indicated, may cause the system controller 250 to take any of a variety of pre-defined actions. For example, the system controller 250 may generate an alarm and/or notification, which may be visual, audible and/or mechanical in nature. The system controller 250 may generate instructions for the tag to alarm in case communication is reestablished. The system controller 250 may additionally or alternatively indicate and/or report the last known location of the tag. In some embodiments, if tag vectoring is possible, the system controller 250 may be configured to also indicate a direction and speed of motion of the tag relative to the last known location of the tag. As such, the system controller 250 may be configured to provide a likely location or search area within which the tag (and the foil bag containing the tag) are likely to be located based on the last known location and the direction and speed of movement based on the elapsed time since the last known location.

FIG. 6 illustrates a block diagram of a method of determining when a tag in a monitoring system is placed in a foil bag or similar container in accordance with some example embodiments. In this regard, for example, the example method may include receiving information indicative of motion of a security tag disposed on a product in a monitoring environment at operation 600. The method may further include, in some example embodiments, tracking motion of the security tag responsive to information received via wireless communication between the security tag and a plurality of locator devices of a locating system at operation 610. The method may further include determining whether a potential foil bag condition exists relative to the security tag based on a loss of communication with the security tag at operation 620. The operation at 620 may be performed while, for example, tracking motion of the security tag. According to some example embodiments, loss of communication with the security tag may be determined based on the absence of receipt of an expected end motion message from the tag.

In some embodiments, the features described above may be augmented or modified, or additional features may be added. These augmentations, modifications and additions may be optional and may be provided in any combination. Thus, although some example modifications, augmentations and additions are listed below, it should be appreciated that any of the modifications, augmentations and additions could be implemented individually or in combination with one or more, or even all of the other modifications, augmentations and additions that are listed. As such, for example, the example method may further include determining that the foil bag condition exists and providing a foil bag condition alert. In some example embodiments, providing the foil bag condition alert may include one or more of displaying a last known location of the security tag on a display, announcing a last known location of the security tag over a communication network, or activating an alarm. In some example embodiments, providing the foil bag condition alert may include sending a message to the security tag directing the security tag to alarm. In some embodiments, determining whether the potential foil bag condition exists may include determining that the potential foil bag condition exists responsive to communication with the security tag not being received (or being lost) for a period of time exceeding a predefined interval. The predefined interval may be, for example, at least two times a sample interval for communication between the security tag and the locator devices. In some example embodiments, determining whether the potential foil bag condition exists may include determining that the potential foil bag condition exists responsive to loss of communication with the security tag prior to receiving a motion end message from the security tag at least a predefined interval after receipt of a motion start message. In some example embodiments, the monitoring environment may further include a second, additional locating system. The security tag may be configured to be trackable via either the first locating system or the second locating system. In some cases, the first locating system may include first locators that transmit first beacon signals to the security tag such that tag position is determined based on signal strength measurements associated with detection of the security tag. The second locating system may include second locators that receive second beacon signals from the security tag such that security tag position is determined based on time of arrival or an angle of arrival of the second beacon signals at the second locators. In an example embodiment, the system controller is alternately enabled to track the security tag using either or both of the first locating system and the second locating system.

Example embodiments may provide a security system that can effectively protect a product from theft, while also enabling the detection of the use of a foil bag or similar container that is intended to defeat the system. Retail product theft may be curtailed, and the overall cost to a retailer using instances of the security system to protect products may therefore be offset by its increased theft deterrent capabilities.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemple embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A security system controller comprising processing circuitry configured to:
receive information indicative of motion of a security tag disposed on a product in a monitoring environment;
track motion of the security tag responsive to information received via wireless communication between the security tag and a plurality of locator devices of a first locating system; and
determine whether a potential foil bag condition exists relative to the security tag based on a loss of communication with the security tag while tracking motion of the security tag.

2. The controller of claim 1, wherein determining whether the potential foil bag condition exists comprises determining that the potential foil bag condition exists responsive to communication with the security tag being lost for a period of time exceeding a predefined interval.

3. The controller of claim 2, wherein the predefined interval is at least two times a sample interval for communication between the security tag and the locator devices.

4. The controller of claim 1, wherein determining whether the potential foil bag condition exists comprises determining that the potential foil bag condition exists responsive to loss of communication with the security tag prior to receiving a motion end message from the security tag at least a predefined interval after receipt of a motion start message.

5. The controller of claim 1, further comprising determining that the foil bag condition exists and providing a foil bag condition alert.

6. The controller of claim 5, wherein providing the foil bag condition alert comprises:
displaying a last known location of the security tag on a display;
announcing a last known location of the security tag over a communication network; or
activating an alarm.

7. The controller of claim 5, wherein providing the foil bag condition alert comprises sending a message to the security tag directing the security tag to alarm.

8. The controller of claim 1, wherein the monitoring environment further comprises a second locating system, and wherein the security tag is configured to be trackable via either the first locating system or the second locating system.

9. The controller of claim 8, wherein the first locating system includes first locators that transmit first beacon signals to the security tag such that tag position is determined based on signal strength measurements associated with detection of the security tag, and wherein the second locating system includes second locators that receive second beacon signals from the security tag such that tag position is determined based on an angle of arrival of the second beacon signals at the second locators.

10. The controller of claim 9, wherein the system controller is alternately enabled to track the security tag using either or both of the first locating system and the second locating system.

11. A security system comprising:
a plurality of security tags disposed on respective products in the monitoring environment;
a plurality of locator devices defining the first locating system, the locator devices configured to wirelessly communicate with the security tags; and
the system controller of any of claims 1 to 10.
